# EUROPÄISCHE PATENTANMELDUNG

(11) **EP 3 623 414 A1**
(43) Veröffentlichungstag der Anmeldung: **18.03.2020**
(21) Anmeldenummer: 18194785.4
(22) Anmeldetag: 17.09.2018
(51) Int. Cl.: C08G 79/00, C08G 64/00, C08G 64/08, C08G 64/16, C08L 69/00

(54) **SELENHALTIGE COPOLYCARBONATE**

(71) Anmelder: Evonik Operations GmbH, 45128 Essen (DE)
(72) Erfinder: QUELL, Thomas Dr., 2030 Antwerpen (BE); FRANKE, Robert Prof. Dr., 45772 Marl (DE); FRIDAG, Dirk, 45721 Haltern am See (DE); WALDVOGEL, Siegfried R. Prof. Dr., 55435 Gau-Algesheim (DE); BEISER, Nicole, 51129 Mainz (DE); BEIL, Sebastian, 72074 Tübingen (DE)
(74) Vertreter: Evonik Patent Association

(57) **Zusammenfassung**

Selenhaltige Copolycarbonate und ein Verfahren zu deren Herstellung.

## Beschreibung

Die Erfindung betrifft selenhaltige Copolycarbonate und ein Verfahren zu deren Herstellung.

Polycarbonate / Copolycarbonate sind eine wichtige Klasse von Kunststoffen die sich durch ihren amorphen, wenig kristallinen Aufbau und gute Transparenz auszeichnen. Ihre Wärmebeständigkeit, elektrisch isolierende Eigenschaften und die hohe Schlagzähigkeit machen sie für viele Anwendungsbereiche wie z.B. der Optik interessant. Als Grundlage für kommerziell genutzte Polycarbonate wird vor allem Bisphenol-A genutzt.

Bisherige Versuche die Eigenschaften von Polycarbonaten zu beeinflussen wurden vor allem mit unterschiedlich substituierten Bisphenolen (z.B. Bisphenol-F, Bisphenol-C, Bisphenol-AP, Bisphenol-BP) unternommen. Diese sind zum Teil schwer zugänglich oder sterisch gehindert und somit weniger flexibel als Bisphenol-A, was die chemischen Eigenschaften negativ beeinflusst.

In Zusammenhang mit dieser Erfindung werden alle Vielfachen eines Monomers, also auch schon mit n = 2, als Polymere bzw. Copolymer bezeichnet.

Der Erfindung lag die Aufgabe zugrunde, ein modifiziertes Polycarbonat bereitzustellen. Insbesondere sollte das Polymer direkt in der Kette und nicht nur über die Substituenten modifiziert werden. Das modifizierte Polycarbonat / Copolycarbonat soll eine höhere Glasübergangstemperatur aufweisen als das Polycarbonat auf Bisphenol-A-Basis. Polycarbonate werden im energieelastischen Temperaturbereichen unterhalb der Glasübergangstemperatur eingesetzt. Durch Erhöhung der Glasübergangstemperatur kann der Temperaturbereich in dem Polycarbonat einsetzbar sind erweitert werden.

Gelöst wird die Aufgabe durch ein selenhaltiges Copolycarbonat nach Anspruch 1.

Selenhaltiges Copolycarbonat der allgemeinen Formel (**I**): 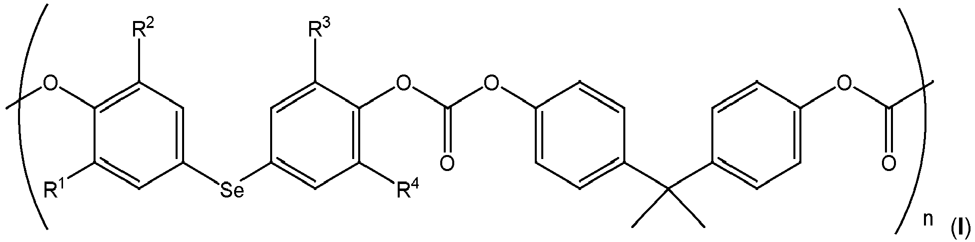 R¹, R², R³, R⁴ jeweils unabhängig voneinander ausgewählt sind aus: -(C₁-C₁₂)-Alkyl, -(C3-C12)-Cycloalkyl, -(C₆-C₂₀)-Aryl, -(C₃-C₂₀)-Heteroaryl,
und n für eine Zahl steht aus dem Bereich von 2 bis 100.

In einer Ausführungsform stehen R¹, R², R³, R⁴ jeweils unabhängig voneinander für -(C₁-C₁₂)-Alkyl.

In einer Ausführungsform stehen R¹, R², R³, R⁴ jeweils für-CH₃.

In einer Ausführungsform steht n für eine Zahl aus dem Bereich von 3 bis 20.

In einer Ausführungsform steht n für eine Zahl aus dem Bereich von 3 bis 10.

In einer Ausführungsform weist das selenhaltige Polycarbonat die Formel (**1**) auf:

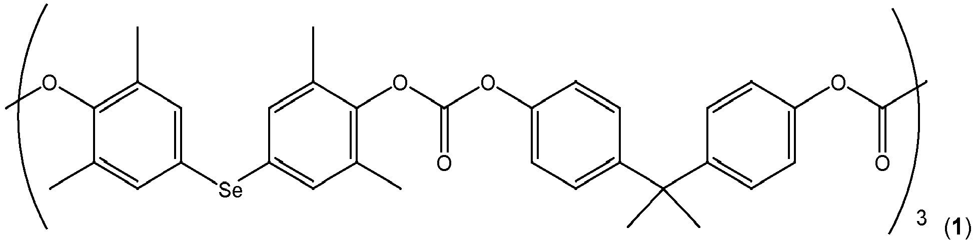

Neben dem selenhaltigen Copolycarbonat wird auch ein Verfahren zu dessen Herstellung beansprucht.

Verfahren zur Herstellung eines zuvor beschriebenen selenhaltigen Copolycarbonats umfassend die Verfahrensschritte:
a) Zugabe des selenhaltigen Monomers;
b) Zugabe eines Katalysators;
c) Schmelzen des Gemisches aus a) und b);
d) Zugabe eines Kohlensäurediesters;
e) Erhitzen der Reaktionsmischung umfassend: selenhaltiges Monomer, Katalysator, Kohlensäurediester;
f) Entfernen des überschüssigen Kohlensäurediesters;
g) Zugabe von Bisphenol A;
h) Erhitzen der Reaktionsmischung umfassend: Zwischenprodukt aus e), Bisphenol A;
i) Aufnehmen des Reaktionsrückstandes in einem Lösungsmittel;
j) Abfiltrieren von unlöslichen Feststoffen;
k) Einengen der Lösung bis sich ein Niederschlag bildet.

Hierbei können die Verfahrensschritte a) und b) in beliebiger Reihenfolge erfolgen.

In einer Variante des Verfahrens erfolgt das Schmelzen in Verfahrensschritt c) bei einer Temperatur im Bereich von 180 °C bis 250 °C.

In einer Variante des Verfahrens erfolgt das Erhitzen in Verfahrensschritt e) bei einer Temperatur im Bereich von 200 °C bis 250 °C.

In einer Variante des Verfahrens erfolgt das Erhitzen in Verfahrensschritt h) bei einer Temperatur im Bereich von 100 °C bis 150 °C.

In einer Variante des Verfahrens erfolgt das Aufnehmen in Verfahrensschritt i) mit Tetrahydrofuran.

In einer Variante des Verfahrens handelt es sich bei dem Kohlensäurediester in den Verfahrensschritten d), e), f) um Diphenylcarbonat.

In einer Variante des Verfahrens handelt es sich bei dem Katalysator in den Verfahrensschritten b) und e) um Natriumhydroxid.

Im Folgenden wird die Erfindung anhand von Ausführungsbeispielen näher erläutert.

### Analytik

### Gaschromatographie

Reaktionsprodukte und Intermediate wurden mittels Gaschromatographie GC-2010 (Shimadzu, Japan) analysiert. Es wurde eine Quarzkapillarsäule ZB-5 (Länge: 30 m, Innendurchmesser: 0.25 mm, Schichtdicke der stationären Phase: 0.25 µm, Trägergas: Wasserstoff, stationäre Phase: (5%-Phenyl)-methylpolysiloxan, Phenomenex, USA)) verwendet. Als Detektor wurde ein Flammen lonisierungsdetektor (FID) bei einer Temperatur von 310 °C verwendet. Die Injektionstemperatur betrug 250 °C und die Trägergasgeschwindigkeit betrug 45,5 cm/s.
Es wurde die Methode "hart" verwendet: Starttemperatur: 50 °C, Heizrate: 15 °C/min, Endtemperatur: 290 °C für 8 min. Die Retentionszeiten wurden in Minuten angegeben.

### Massenspektrometrie

Massenspektrometrische Messungen wurden an einem Agilent 6545 Q-ToF MS Spektrometer durchgeführt, welches mit einer Chemischen Ionisierung bei Atmosphärendruck (APCI) Quelle ausgestattet war.

### NMR Spektroskopie

NMR Spektren wurden an einem Multikernresonanzspektrometer des Typs AV II 400 (Bruker, analytic measuring technique, Karlsruhe, Deutschland) durchgeführt. Die chemischen Verschiebungen wurden gegen das Signal des Lösungsmittels in ppm referenziert (CDCl₃: ¹H = 7.26 ppm, ¹³C = 77.2 ppm). Das Referenzieren der ⁷⁷Se Messungen wurde durch Kalibrierung des Spektrometers auf Me₂Se realisiert.

### Differenz-Thermoanalyse / Differencial Scanning Calorimetry (DSC)

DSC Messungen wurden unter Stickstoffatmosphäre an einem PerkinElmer DSC 8500 in einem Temperaturbereich von 0-220 °C und Heizraten von 5 und 10 °C/min durchgeführt.

### Größenausschlusschromatographie / Gelpermeationschromatographie (GPC)

GPC Messungen wurden an einem Agilent 1100 series integrierten Instrument durchgeführt. Es wurden a PSS HEMA Säulen (100/1000/10000 Å Porösität) und ein UV-Detektor verwendet. Die Proben wurden in Tetrahydrofuran (THF, mit 0.25 g/L LiBr als Additiv) vorbereitet, eine Kalibrierung erfolgte gegen Polystyrol Standards.

### Synthese Monomer

### Bis(3,5-dimethyl-2-hydroxyphenyl)selen

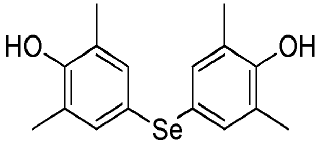

2,6-Dimethylphenol (10 g, 81,8 mmol) wurde in Pyridin (120 mL) gelöst und Selendioxid (4,99 g, 45.0 mmol) wurde zugegeben. Die Reaktionsmischung wurde für 74 h auf 55 °C unter Rühren erhitzt. Der gebildete Niederschlag wurde abfiltriert und die flüssige Phase mit Dichlormethan (150 mL) verdünnt. Die organische Phase wurde mit HCl (aq. 10%, 3 x 100 mL) und gesättigter NaCl Lösung (150 mL) gewaschen und anschließend über Natriumsulfat getrocknet. Nach dem Entfernen des Lösungsmittels wurde der Rückstand mehrfach in n-Heptan (3 x 200 mL) unter Rückfluss erhitzt. Die heiße Lösung wurde dekantiert und die vereinigten organischen Extrakte ergaben durch Kühlung auf 7 °C gelbe Kristalle (2,70 g, 8,4 mmol, 21%).
¹H-NMR (400 MHz, CDCl₃): δ = 7,13 (s, 4H), 4,64 (s, 2H, O*H*), 2,20 (s, 12H) ppm.
⁷⁷Se-NMR (76 MHz, CDCl₃): δ = 390,1 (s) ppm.
GC: 15.815 min (method "hart").

### Synthese Copolymer

### Poly-[bis(3,5-dimethyl-2-hydroxyphenyl)selenium-bisphenol A]-carbonat (1)

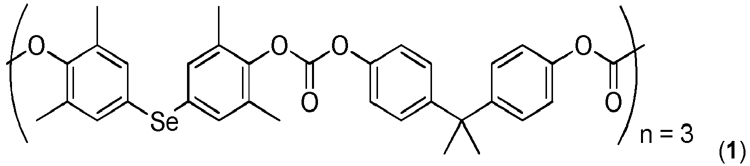

Bis(3,5-dimethyl-2-hydroxyphenyl)selen (500 mg, 1,56 mmol) und Natriumhydroxid (20 mg, 4 wt%) wurden bei 200 °C geschmolzen. Nach etwa 30 min rühren wurde Diphenylcarbonat (3,30 g, 15,6 mmol) zugegeben. Die Reaktionsmischung wurde bei 220 °C für 1 h gerührt. Nach dem Abkühlen wurde nichtreagiertes Diphenylcarbonat (1,73 g, GC-rein) mittels Kugelrohrdestillation entfernt. Zu dem Rückstand (1,16 g) wurde Bisphenol A (360 mg, 1,56 mmol), Natriumhydroxid (20 mg, 4wt%) und trockenes Toluol (20 mL) gegeben. Die Mischung wurde für 20 Stunden bei 115 °C gerührt, wobei sich ein Niederschlag bildete. Toluol wurde destillativ entfernt. Der Rückstand wurde in THF (7 mL) aufgenommen, der unlösliche Rückstand abfiltriert und die Lösung aus Methanol (200 mL) ausgefällt. Das Lösungsmittel wurde eingeengt und auf 7 °C abgekühlt, wobei sich ein hellbrauner Niederschlag (190 mg) gebildet hat. ¹H-NMR (400 MHz, CDCl₃): 7.46 - 6.32 (m), 2.40 - 1.85 (m), 1.74 - 1.51 (m) ppm.
⁷⁷Se-NMR (76 MHz, CDCl₃): 409.6 (bs) ppm.
DSC: 83,61 °C; T_{g} = 156 °C, cₚ = 0,275 J/g*°C.
GPC: Mₙ = 2142; M_{w} = 29342; *D* = 13,7.
MS (APCI): m/z = 338, 451, 613, 767, 839, 901, 1113, 1208.

### Synthese Vergleichspolymer

### Poly[bisphenol A]carbonat (2)

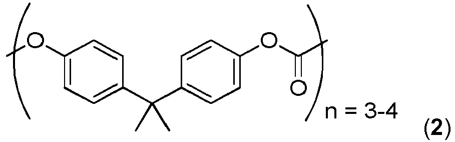

Bisphenol A (500 mg, 1,56 mmol) und Natriumhydroxid (20 mg, 4 wt%) wurden bei 200 °C geschmolzen. Nach etwa 30 min rühren wurde Diphenylcarbonat (330 mg, 1,56 mmol) zugegeben. Die Reaktionsmischung wurde bei 220 °C für 1 h gerührt. Nach dem Abkühlen wurde der Rückstand in THF (7 mL) aufgenommen, der unlösliche Rückstand abfiltriert und die Lösung aus Methanol (200 mL) ausgefällt. Das Lösungsmittel wurde so lange eingeengt bis sich ein brauner Niederschlag gebildet hat. Der Feststoff wurde filtriert und getrocknet (18 mg).
¹H-NMR (400 MHz, CDCl₃): 7,50 - 6,51 (bm), 1,98 - 1,41 (bm) ppm.
¹³C-NMR (101 MHz, CDCl₃): 128,6- 127,5 (m), 121,7- 120,8 (m), 115,3- 114,8 (m), 31,5-30,7 (m) ppm.
DSC: T_{g} = 128 °C, cₚ = 0,250 J/g*°C.
GPC: Mₙ = 3531; M_{w} = 5672; *D* = 1,61.
MS (APCI): m/z = 523.

### Bestimmung Glasübergangstemperatur (T_{g})

Die Glasübergangstemperatur (T_{g}) wurde mittels Differenz-Thermoanalyse / Differencial Scanning Calorimetry (DSC) bestimmt. Die DSC-Messungen wurden unter Stickstoffatmosphäre an einem PerkinElmer DSC 8500 in einem Temperaturbereich von 0-220 °C und Heizraten von 5 und 10 °C/min durchgeführt.

Die Ergebnisse sind in der nachfolgenden Tabelle zusammengefasst:

| Polymer | T_{g} [°C] |
|---|---|
| (**1**)* | 156 |
| (**2**) | 128 |

| | |
|---|---|
| * erfindungsgemäßes Ausführungsbeispiel | |

Wie die Versuchsergebnisse zeigen, wird die Aufgabe durch das erfindungsgemäße Ausführungsbeispiel gelöst.

## Patentansprüche

1. Selenhaltiges Copolycarbonat der allgemeinen Formel (**I**): 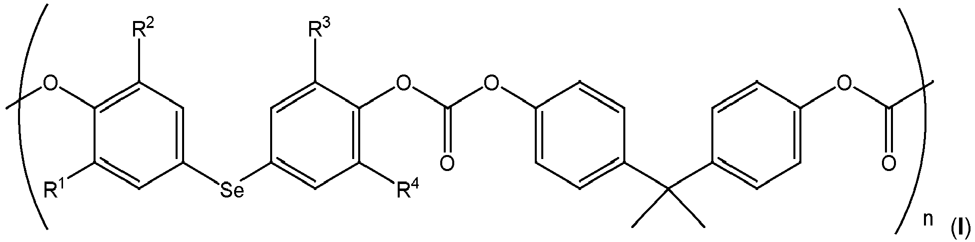
R¹, R², R³, R⁴ jeweils unabhängig voneinander ausgewählt sind aus: -(C₁-C₁₂)-Alkyl, -(C₃-C₁₂)-Cycloalkyl, -(C₆-C₂₀)-Aryl, -(C₃-C₂₀)-Heteroaryl,
und n für eine Zahl steht aus dem Bereich von 2 bis 100.

2. Selenhaltiges Copolycarbonat nach Anspruch 1,
wobei R¹, R², R³, R⁴ jeweils unabhängig voneinander für -(C₁-C₁₂)-Alkyl stehen.

3. Selenhaltiges Copolycarbonat nach einem der Ansprüche 1 oder 2,
wobei R¹, R², R³, R⁴ jeweils für-CH₃ stehen.

4. Selenhaltiges Copolycarbonat nach einem der Ansprüche 1 bis 3,
wobei n für eine Zahl steht aus dem Bereich von 3 bis 20.

5. Selenhaltiges Copolycarbonat nach einem der Ansprüche 1 bis 4,
wobei n für eine Zahl steht aus dem Bereich von 3 bis 10.

6. Selenhaltiges Copolycarbonat nach einem der Ansprüche 1 bis 5,
welches die Formel (**1**) aufweist:

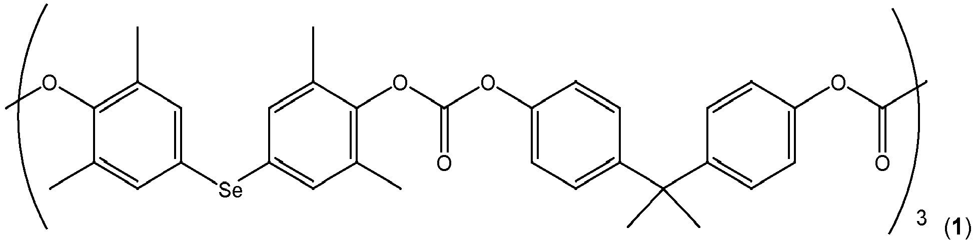

7. Verfahren zur Herstellung eines selenhaltigen Copolycarbonats gemäß einem der Ansprüche 1 bis 6 umfassend die Verfahrensschritte:
a) Zugabe des selenhaltigen Monomers;
b) Zugabe eines Katalysators;
c) Schmelzen des Gemisches aus a) und b);
d) Zugabe eines Kohlensäurediesters;
e) Erhitzen der Reaktionsmischung umfassend: selenhaltiges Monomer, Katalysator, Kohlensäurediester;
f) Entfernen des überschüssigen Kohlensäurediesters;
g) Zugabe von Bisphenol A;
h) Erhitzen der Reaktionsmischung umfassend: Zwischenprodukt aus e), Bisphenol A;
i) Aufnehmen des Reaktionsrückstandes in einem Lösungsmittel;
j) Abfiltrieren von unlöslichen Feststoffen;
k) Einengen der Lösung bis sich ein Niederschlag bildet.

8. Verfahren nach Anspruch 7,
wobei das Schmelzen in Verfahrensschritt c) bei einer Temperatur im Bereich von 180 °C bis 250 °C erfolgt.

9. Verfahren nach einem der Ansprüche 7 oder 8,
wobei das Erhitzen in Verfahrensschritt e) bei einer Temperatur im Bereich von 200 °C bis 250 °C erfolgt.

10. Verfahren nach einem der Ansprüche 7 bis 9,
wobei das Erhitzen in Verfahrensschritt h) bei einer Temperatur im Bereich von 100 °C bis 150 °C erfolgt.

11. Verfahren nach einem der Ansprüche 7 bis 10,
wobei das Aufnehmen in Verfahrensschritt i) mit Tetrahydrofuran erfolgt.

12. Verfahren nach einem der Ansprüche 7 bis 11,
wobei es sich bei dem Kohlensäurediester in den Verfahrensschritten d), e), f) um Diphenylcarbonat handelt.

13. Verfahren nach einem der Ansprüche 7 bis 12,
wobei es sich bei dem Katalysator in den Verfahrensschritten b) und e) um Natriumhydroxid handelt.
